# EUROPÄISCHE PATENTANMELDUNG

(11) **EP 2 390 743 A1**
(43) Veröffentlichungstag der Anmeldung: **30.11.2011**
(21) Anmeldenummer: 10164524.0
(22) Anmeldetag: 31.05.2010
(51) Int. Cl.: G05B 23/02

(54) **Verfahren zur Überwachung des Ablaufs eines Steuerrezeptes eines Chargenprozesses**

(71) Anmelder: Siemens Aktiengesellschaft, 80333 München (DE)
(72) Erfinder: Horst, Andre, 76187, Karlsruhe (DE); Richard, Christophe, 67470, Seltz (FR)

(57) **Zusammenfassung**

Die Erfindung betrifft ein Verfahren zur Überwachung des Ablaufs eines Steuerrezeptes (1) eines Chargenprozesses, das Rezeptelemente (2 - 6) umfasst und das auf einer Anzeigeeinheit eines Batch- oder Operator-Systems darstellbar ist. Um die Überwachung des Ablaufs eines Steuerrezepts (1) zu vereinfachen, werden folgende Verfahrensschritte vorgeschlagen:
- für mehrere dieser Rezeptelemente (2 - 6) wird jeweils eine rezeptelementspezifische Regel erstellt,
- während der Laufzeit des Steuerrezepts (1) wird für jedes dieser mehreren Rezeptelemente (2 - 6) die Einhaltung der rezeptelementspezifischen Regel überwacht,
- jedes Rezeptelement (2 - 6) wird automatisch in eine von mehreren Problemstufen klassifiziert, falls die rezeptelementspezifische Regel des jeweiligen Rezeptelementes nicht eingehalten wird, und
- die klassifizierten Rezeptelemente (2 - 6) werden zusammen mit der jeweiligen Problemstufe auf der Anzeigeeinheit tabellarisch dargestellt.

## Beschreibung

Die Erfindung betrifft ein Verfahren zur Überwachung des Ablaufs eines Steuerrezeptes eines Chargenprozesses, das Rezeptelemente umfasst und das auf einer Anzeigeeinheit eines Operator- oder Batch-Systems darstellbar ist. Darüber hinaus betrifft die Erfindung eine Anordnung mit einem Operator- und einem Batch-System, welches zur Durchführung des Verfahrens geeignet ist.

Ein Computerprogramm zur Verwirklichung eines Verfahrens gemäß dem Oberbegriff des Anspruchs 1 ist aus dem Siemens-Katalog "ST PCS 7 - März 2010", SIMATIC PCS 7, Kapitel 10 bekannt. Ein Anwender erstellt mittels einer so genannten auf einem Programmiergerät ablauffähigen "BATCH Software" grafisch auf einer Anzeigeeinheit ein Rezept zur Steuerung eines Chargenprozesses. Während des Steuerbetriebs, während dessen das Rezept sequentiell durch ein Batch-System abgearbeitet wird, wobei korrespondierend dazu ein mit dem Batch-System online verbundenes Automatisierungsgerät zu jeder Rezeptphase jeweils einen dieser Rezeptphase zugeordneten Funktionsbaustein abarbeitet, überwacht ein Operator mittels eines Operator-Systems den Rezeptablauf. Dazu verfolgt und kontrolliert der Operator das grafisch auf einer Anzeigeeinheit des Operator-Systems dargestellte Rezept, um Störungen und Probleme während der Steuerung des Chargenprozesses zu erkennen, wobei einzelne Rezeptelemente anhand bestimmter Zustände gekennzeichnet werden. Diese Zustände weisen gewöhnlich nicht auf potentielle Probleme hin, sondern - wenn überhaupt - nur auf konkrete Fehler bzw. Störungen, die von der Hardware des Automatisierungsgeräts an das Operator-System gemeldet werden. Um eventuelle Probleme im Gesamtablauf zu erkennen - z. B. für den Fall, dass eine Schleife im Rezeptablauf nicht beendet wird, weil bestimmte Kenngrößen nicht erreicht werden - muss der Operator stets das gesamte Rezept im Überblick haben. Sind die Steuerrezepte komplex und noch in die Tiefe geschachtelt, ist es zunehmend schwerer, den Ablauf kontinuierlich zu verfolgen.

Darüber hinaus weist ein Rezeptablauf häufig Rezeptelemente auf, die einen Eingriff des Operators erfordern. Einen derartigen Eingriff, z. B. einen Eingriff in Form einer Teilanlagenauswahl, einer Breakpoint-Quittierung oder einer Dialog-Bestätigung, kann der Operator nur im Rahmen einer Gesamtübersicht des Rezeptes durch eine entsprechende Bedienung am Rezeptelement direkt durchführen. Treten gleichzeitig mehrere Ereignisse auf, die einen Operator-Eingriff erfordern, verliert der Operator schnell die Übersicht im Rezeptablauf. Ferner kann der Operator erforderliche Bedieneingriffe übersehen, was zu Störungen des Steuerbetriebs über einen längeren Zeitraum führen kann.

Der vorliegenden Erfindung liegt die Aufgabe zugrunde, ein Verfahren der eingangs genannten Art anzugeben, mittels dessen die Überwachung des Ablaufs eines Steuerrezepts vereinfacht wird. Darüber hinaus ist eine Anordnung mit einem Operator- und einem Batch-System zu schaffen, welches zur Durchführung des Verfahrens geeignet ist.

Diese Aufgabe wird im Hinblick auf das Verfahren durch die im kennzeichnenden Teil des Anspruchs 1 angegebenen, im Hinblick auf die Anordnung durch die im kennzeichnenden Teil des Anspruchs 3 angegebenen Maßnahmen gelöst.

Vorteilhaft ist, dass ein Operator schnell über Störungen und/oder erforderliche Eingriffe informiert wird und entsprechende Maßnahmen einleiten kann.

In einer Ausgestaltung der Erfindung ist vorgesehen, dass mindestens eines der klassifizierten Rezeptelemente zeitgesteuert in eine andere Problemstufe umklassifiziert wird. Dadurch kann einem Rezeptelement, welchem zunächst eine niederpriore Problemstufe zugeordnet wurde, einfach eine höherpriore zugeordnet werden, wobei dieses Rezeptelement mit dieser höherprioren Problemstufe an einer der oberen Zeilen einer Tabelle angezeigt wird, um den Operator schnell auf die kritischere Einstufung hinzuweisen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figuren 1 und 2: Klassifizierungs-Aufstellungen,
- Figur 3: eine tabellarische Darstellung von Rezeptelementen und
- Figur 4: eine Darstellung eines Steuerrezepts.

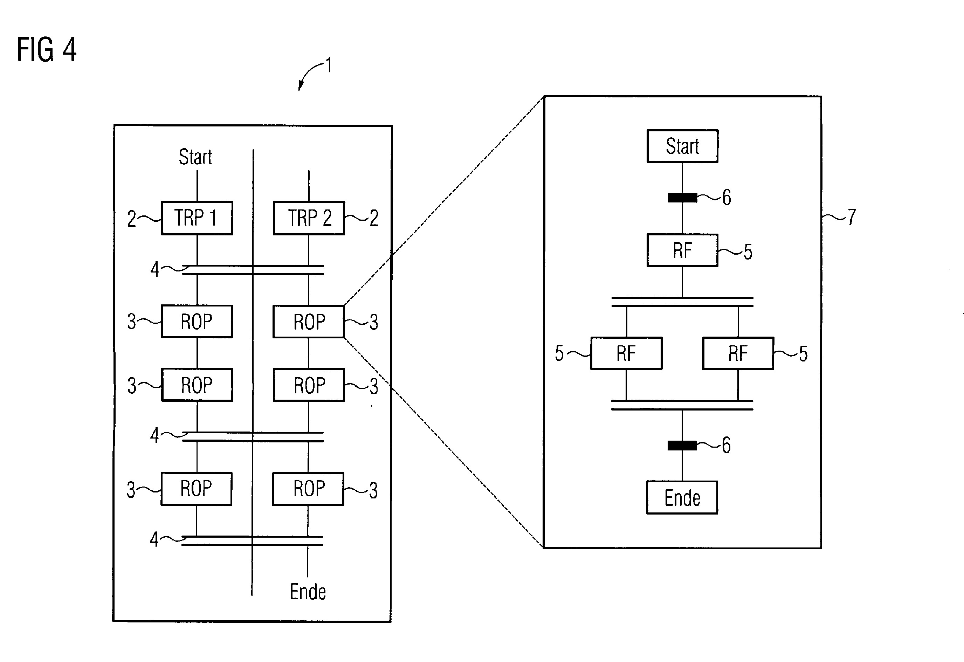

Es wird zunächst auf Figur 4 verwiesen, in welcher ein Steuerrezept 1 (eine Rezeptprozedur) eines Chargenprozesses in einer an sich bekannten Art und Weise auf einer Anzeigeeinheit eines Batch- oder eines Operator-Systems dargestellt ist. Das Steuerrezept 1, welches ein Anwender mittels einer geeigneten Batch-Software auf einem Engineering-System erstellt, ist zur Steuerung eines Prozesses bzw. einer Produktion auf einer Anlage vorgesehen. Das Steuerrezept 1 weist mehrere Teilrezeptprozeduren 2 auf, die jeweils einen Teilprozess bzw. eine Prozessstufe auf einer Teilanlage steuern. Jede dieser Teilrezeptprozeduren 2 weist eine Vielzahl von Rezeptoperationen 3 (ROP) und eine Vielzahl von Parallelverzweigungen 4 auf, wobei jede dieser Rezeptoperationen 3, z. B. eine Rezeptoperation "Heizen" und "Mischen", wiederum eine Vielzahl von Rezeptoperationen und/oder Rezeptfunktionen 5 sowie Transitionen 6 beinhalten kann, was in der Figur 4 durch die Darstellung einer weiteren Editier- bzw. Darstellungsebene 7 angedeutet ist. Selbstverständlich kann das Steuerrezept 1 weitere Teile, z. B. Synchronisationslinien, Schleifen, Operatoranweisungen oder Alternativabzweigungen, umfassen. Diese Rezeptoperationen und/oder Rezeptfunktionen stehen in Wirkverbindung mit geeigneten Hard- und Softwarekomponenten eines Automatisierungsgerätes oder einer Automatisierungseinrichtung, wobei während des Steuerbetriebs das Steuerrezept 1 sequentiell durch das Batch-System abgearbeitet wird und korrespondierend dazu ein mit dem Batch-System online verbundenes Automatisierungsgerät oder online verbundene Automatisierungsgeräte zu jeder Rezeptoperation bzw. -funktion jeweils einen dieser Operation oder Funktion zugeordneten Funktionsbaustein abarbeitet bzw. abarbeiten. Während der Steuerung überwacht ein Operator mittels des Operator-Systems den Ablauf des Steuerrezepts 1, wobei der Operator das Steuerrezept 1 auf der Anzeigeeinheit verfolgt und kontrolliert, um Störungen und Probleme während der Steuerung des Chargenprozesses zu erkennen.

Um den Ablauf eines Steuerrezepts besser überwachen und Störungen einfacher erkennen zu können, überwacht eine auf dem Batch- oder Operator-System ablaufende Überwachungs-Software alle Rezeptelemente des Steuerrezepts im Hinblick auf deren jeweiligen Zustände, Laufzeiten, Laufzeitüberschreitungen, Anzahl der Ausführungen sowie Zustandsübergänge und Dauer der Zustandsübergänge, wobei die Überwachungs-Software diese Informationen mit rezeptelementspezifischen Regeln, die der Anwender mittels der Batch-Software erstellt und in eine Liste im Batch-System hinterlegt, vergleicht. Unter dem Begriff "Rezeptelement" werden in diesem Zusammenhang Teile des Steuerrezepts wie beispielsweise Teilrezeptprozeduren, Rezeptoperationen, Rezeptfunktionen sowie Transitionen oder Operatordialoge verstanden.

Im Folgenden werden dazu insbesondere in den Figuren die Begriffe
- RUP (Recipe Unit Procedure) für eine Teilrezeptprozedur,
- ROP (Recipe Operation) für eine Rezeptoperation,
- RF (RPH, Recipe Phase) für eine Rezeptfunktion,
- T für eine Transition und
- Opd für einen Operatordialog
verwendet.

Die rezeptelementspezifischen Regeln können sich sowohl auf einen Grundzustand, einen Belegungszustand und/oder auf eine so genannte adaptive bzw. erweiterte Zustandskennung beziehen. Ein Grundzustand eines Rezeptelements "Heizen" oder "Dosieren" umfasst z. B. einen Zustand "startend", "laufend", "pausierend" oder "anhaltend". Unter Belegungszuständen sind beispielsweise "Teilanlage zur Ausführung einer Teilrezeptprozedur belegt" oder "Steuerung bzw. Automatisierungsgerät ist durch Rezeptoperation belegt" zu verstehen. Als erweiterte Zustandskennungen eines Rezeptelements sind z. B. vorgesehen "Teilanlage belegen" (um die dazugehörige Teilrezeptprozedur ausführen zu können), "Elektronische Signierung vornehmen" oder "Fehlerzustand".

Folgende rezeptelementspezifischen Regeln, deren Einhaltung das Überwachungsprogramm überwacht, sind z. B. vorgesehen:
- eine Teilrezeptprozedur einer Teilanlage wird nicht innerhalb einer bestimmten Zeitdauer ausgeführt (z. B. weil die Steuerung bzw. das Automatisierungsgerät die Teilanlage nicht belegt hat oder die Verbindung zwischen dem Batch-oder Operator-System und der Steuerung unterbrochen ist),
- ein Operatordialog wird nicht innerhalb einer bestimmten Zeitspanne quittiert,
- eine Transition ist nach einer bestimmten Zeitdauer noch nicht beendet (weil z. B. ein Haltepunkt noch nicht quittiert wurde),
- eine Rezeptoperation ist nach einer bestimmten Zeitdauer noch nicht beendet (beispielsweise weil eine oder mehrere Rezeptphasen nicht schnell genug ausgeführt wurden, z. B. die Drehzahl eines Motors konnte in der erwarteten Zeit nicht erreicht werden).

Für den Fall, dass z. B. eine Teilrezeptprozedur für eine Teilanlage nicht innerhalb einer Zeitspanne von 10 Sekunden nach der erwarteten Ausführungsdauer beendet wird, klassifiziert das Überwachungsprogramm diese Teilrezeptprozedur zunächst in eine niederpriore Problemstufe "Hinweis". Falls diese Teilrezeptprozedur nach einer Zeitspanne von beispielsweise 1 Minute immer noch nicht beendet wurde, erfolgt mittels des Überwachungsprogramms automatisch eine Umklassifizierung in eine höherpriore Problemstufe "Warnung" und schließlich - falls diese Teilrezeptprozedur auch nach 10 Minuten noch nicht beendet wurde - in eine höchstpriore Problemstufe "Kritisch".

Die mit den Problemstufen klassifizierten Rezeptelemente werden mit den dazugehörigen Problemstufen "Hinweis", "Warnung" und "Kritisch" in einer Tabelle auf der Anzeigeeinheit des Batch- oder Operator-Systems dargestellt, wobei die Tabelle nach den klassifizierten Problemstufen "Kritisch", "Warnung" und "Hinweis" sortiert ist.

Selbstverständlich ist es möglich, mehr als drei Problemstufen vorzusehen. Gewöhnlich reicht eine Klassifikation gemäß den genannten drei Problemstufen aus.

Allgemein gilt für die Problemstufe "Hinweis", dass ein Operator darauf hinzuweisen ist, falls das Überwachungsprogramm eine Unregelmäßigkeit entdeckt oder falls das Überwachungsprogramm einen erforderlichen Operatoreingriff erkennt. Dadurch wird ermöglicht, dass der Operator frühzeitig eventuelle Probleme erkennt und/oder frühzeitig eingreifen kann.

Für die Problemstufe "Warnung" gilt allgemein, dass dieser Stufe im Wesentlichen ein vorheriger Hinweis vorausgegangen ist, der über eine definierte bzw. vorgegebene Zeit hinaus nicht weiter beachtet und/oder der Konflikt bzw. das Problem noch nicht gelöst wurde. Beispielsweise hat eine Teilrezeptprozedur ihre entsprechende Teilanlage nach 1 Minute immer noch nicht belegt oder ein Haltepunkt steht seit über einer halben Stunde an.

Die Problemstufe "Kritisch" ist für alle Rezeptelemente vorgesehen, die im Fehlerstatus sind. Darüber hinaus ist diese Problemstufe vorgesehen für die mit der Problemstufe "Warnung" klassifizierten Rezeptelemente, die eine definierte bzw. vorgegebene Zeit nicht beachtet wurden und deshalb der Konflikt bzw. das Problem immer noch existiert. Beispielsweise eine bereits mit der Problemstufe "Warnung" klassifizierte Transition, die bereits seit 10 Minuten immer noch nicht beendet wurde, oder eine bereits mit der Problemstufe "Warnung" klassifizierte Teilanlage konnte seit geraumer Zeit nicht belegt werden. In diesen Fällen wird dann automatisch in die Problemstufe "Kritisch" umklassifiziert.

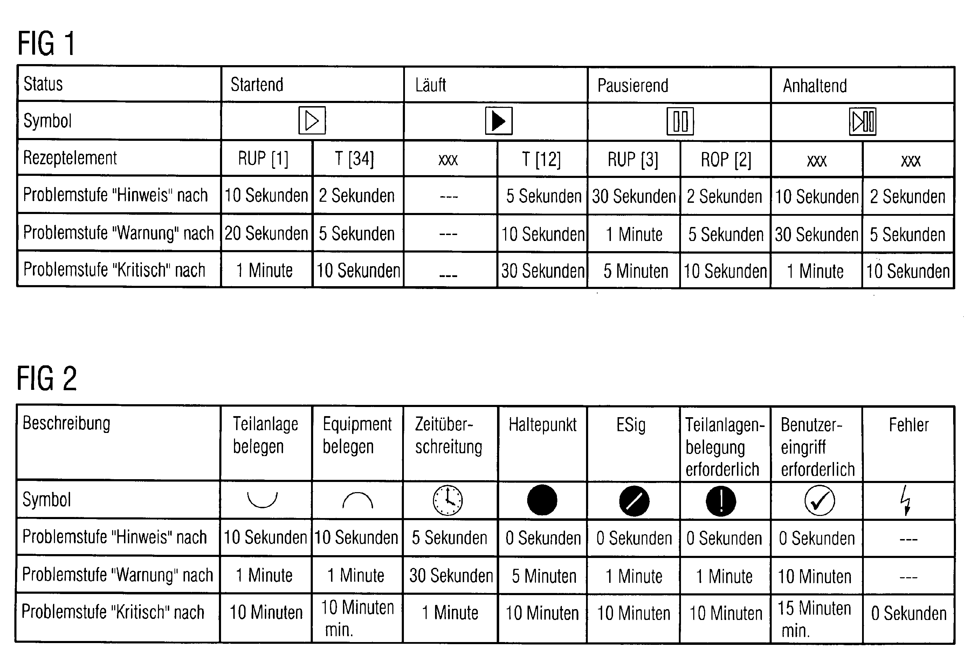

Figur 1 und Figur 2 zeigen in einer nicht abschließenden Aufstellung Klassifizierungen von Rezeptelementen in Problemstufen, wobei in Figur 1 eine Klassifizierung anhand von Rezeptelementen und deren Zustand und in Figur 2 eine Klassifizierung von Rezeptelementen anhand einer adaptiven bzw. erweiterten Zustandskennung erfolgt. In beiden Aufstellungen sind die drei Problemstufen "Hinweis", "Warnung" und "Kritisch" vorgesehen, wobei verschiedene Rezeptelemente unterschiedliche Zeiten zur automatischen Umklassifizierung in eine andere Problemstufe, z. B. von der Problemstufe "Warnung" in die Problemstufe "Kritisch", aufweisen.

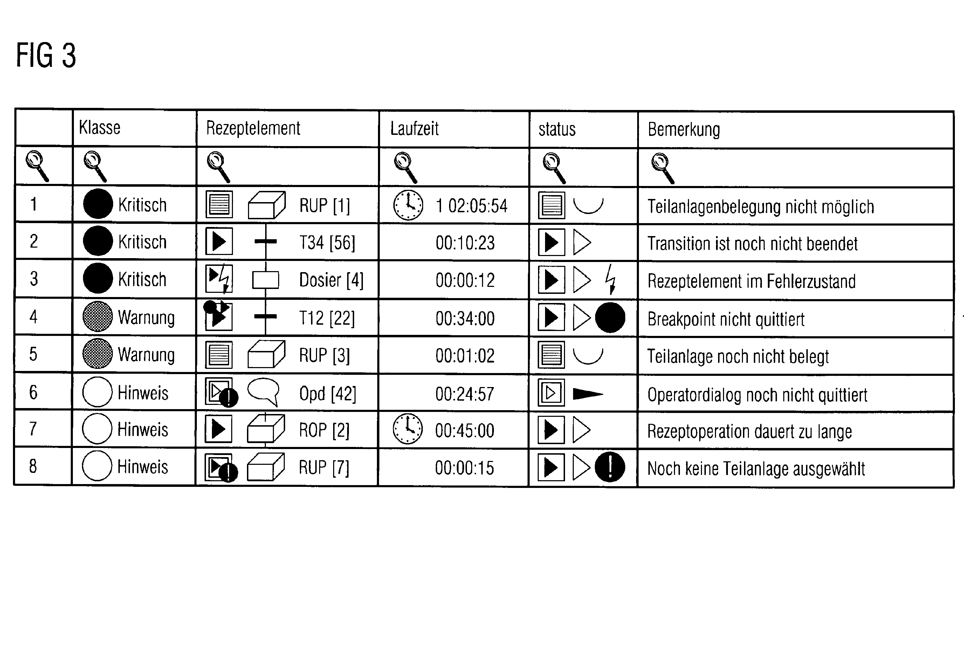

Figur 3 zeigt eine tabellarische Darstellung von Rezeptelementen mit dazugehörigen Problemstufen, welche das Überwachungsprogramm aufgrund von rezeptelementspezifischen Regeln und der Überwachung aller Rezeptelemente eines Steuerrezepts im Hinblick auf deren jeweiligen Zustände, Laufzeiten, Laufzeitüberschreitungen, Anzahl der Ausführungen sowie Zustandsübergänge und Dauer der Zustandsübergänge erstellt hat und auf einer Anzeigeeinheit eines Operator-oder Batch-Systems anzeigt. Zu jedem in einer Spalte dargestellten Rezeptelement sind in einer weiteren Spalte die Problemstufen "Kritisch", "Warnung" und "Hinweis" dargestellt, wobei die mit "Kritisch" klassifizierten Rezeptelemente, die eine erhöhte Aufmerksamkeit eines Operators bedürfen, in den obersten Tabellenzeilen eingetragen sind. Diesen Rezeptelementen folgen die Rezeptelemente, denen die Klassifizierung "Warnung" zugeordnet ist. In den untersten Zeilen sind schließlich die niederprioren, in die Problemstufe "Hinweis" eingestuften Rezeptelemente aufgeführt. In der Spalte "Rezeptelemente" sind ferner die erweiterten Zustandskennungen eingetragen, die zur besseren Übersicht zusätzlich in einer Spalte "Status" dargestellt sind. Darüber hinaus entnimmt der Operator aus einer Spalte "Laufzeit" weitere Informationen, die anzeigen, wie lange die Rezeptelemente bereits aktiv sind. In einer weiteren Spalte "Bemerkungen" werden dem Operator Hinweise über das jeweilige Problem angezeigt. Aufgrund dieser Angaben wird der Operator schnell über Störungen und/oder erforderliche Eingriffe informiert und kann entsprechende Maßnahmen einleiten.

## Patentansprüche

1. Verfahren zur Überwachung des Ablaufs eines Steuerrezeptes (1) eines Chargenprozesses, das Rezeptelemente (2 - 6) umfasst und das auf einer Anzeigeeinheit eines Operator- oder eines Batch-Systems darstellbar ist, **gekennzeichnet durch** folgende Verfahrensschritte:
- für mehrere dieser Rezeptelemente (2 - 6) wird jeweils eine rezeptelementspezifische Regel erstellt,
- während der Laufzeit des Steuerrezepts (1) wird für jedes dieser mehreren Rezeptelemente (2 - 6) die Einhaltung der rezeptelementspezifischen Regel überwacht,
- jedes Rezeptelement (2 - 6) wird automatisch in eine von mehreren Problemstufen klassifiziert, falls die rezeptelementspezifische Regel des jeweiligen Rezeptelementes (2 - 6) nicht eingehalten wird, und
- die klassifizierten Rezeptelemente (2 - 6) werden zusammen mit der jeweiligen Problemstufe auf der Anzeigeeinheit tabellarisch dargestellt.

2. Verfahren nach Anspruch 1, **dadurch gekennzeichnet, dass** mindestens eines der klassifizierten Rezeptelemente (2 - 6) zeitgesteuert in eine andere Problemstufe umklassifiziert wird.

3. Anordnung mit einem Operator- und einem Batch-System, das mit einem Computerprogramm versehen ist, welches während seines Ablaufs in Wirkverbindung mit einem Automatisierungsgerät ein mehrere Rezeptelemente umfassendes Steuerrezept (1) eines Chargenprozesses steuert, das auf einer Anzeigeeinheit des Batch- oder Operator-Systems dargestellt ist, **dadurch gekennzeichnet, dass** das Computerprogramm oder ein Überwachungsprogramm des Operator-Systems dazu ausgebildet ist,
- für mehrere dieser Rezeptelemente (2 - 6) jeweils eine rezeptelementspezifische Regel zu erstellen,
- während der Laufzeit des Steuerrezepts (1) für jedes dieser mehreren Rezeptelemente (2 - 6) die Einhaltung der rezeptelementspezifischen Regel zu überwachen,
- jedes Rezeptelement (2 - 6) automatisch in eine von mehreren Problemstufen zu klassifizieren, falls die rezeptelementspezifische Regel des jeweiligen Rezeptelementes (2 - 6) nicht eingehalten wird, und
- die klassifizierten Rezeptelemente (2 - 6) zusammen mit der jeweiligen Problemstufe auf der Anzeigeeinheit des Operator-Systems tabellarisch darzustellen.

4. Anordnung nach Anspruch 3, **dadurch gekennzeichnet, dass** das Computerprogramm oder das Überwachungsprogramm ferner dazu ausgebildet ist, mindestens eines der klassifizierten Rezeptelemente (2 - 6) zeitgesteuert in eine andere Problemstufe umzuklassifizieren.
